# FASCICULE DE BREVET EUROPEEN

(11) **EP 0 494 826 B1**
(45) Date de publication et mention de la délivrance du brevet: **03.01.1996**
(21) Numéro de dépôt: 92400054.0
(22) Date de dépôt: 09.01.1992
(51) Int. Cl.: G09G 3/36

(54) **Procédé d'affichage sur un écran matriciel d'images comportant Q niveaux de gris**
Darstellungsverfahren von Bildern mit Q Grauwerten auf einem Matrix-Bildschirm
Method for displaying images with Q grey levels on a matrix screen

(30) Priorité: 11.01.1991 FR 9100288
(43) Date de publication de la demande: 15.07.1992
(73) Titulaire: COMMISSARIAT A L'ENERGIE ATOMIQUE, F-75015 Paris (FR)
(72) Inventeur: Leroux, Thierry, F-38600 Fontaine (FR)
(74) Mandataire: Dubois-Chabert, Guy

(56) Documents cités:
- EP-A- 0 364 307
- EP-A- 0 384 403
- CONFERENCE RECORD OF THE INTERNATIONAL DISPLAY RESEARCH CONFERENCE, CONF. 1985, SAN DIEGO 1985, NEW YORK, pages 213-221 ; S. LAGERWALL ET AL.: 'Ferroelectric Liquid Crystals for Display'

## Description

La présente invention se rapporte d'une manière générale aux procédés d'affichage des écrans matriciels qui sont composés, comme on le sait, d'un certain nombre de pixels situés aux croisements de K conducteurs lignes et de M conducteurs colonnes.

La présente invention s'applique à tout type d'écran matriciel connu, qu'il fonctionne par transmission ou par émission et plus particulièrement aux écrans à cristaux liquides multiplexés passifs, qui permettent l'affichage sur chaque pixel de l'un de deux états que l'on désignera par commodité par état noir et état blanc.

De manière également connue, l'adressage des écrans matriciels comportant K lignes et M colonnes se fait par balayage successifs des différentes lignes. Pendant un temps égal au temps ligne Tl une ligne l est "ouverte" par application d'une tension VL. Pendant cette durée, les M signaux de données d'image sont adressés sur les M colonnes sous la forme de tensions par exemple dans le cas des cristaux liquides ±VC. Le pixel situé à l'intersection de la ligne l et de la colonne m est ainsi excité par une différence de potentiel VL±VC qui, selon son emplacement par rapport au seuil de commutation du cristal liquide de l'écran, le rend soit transparent (état blanc) soit opaque (état noir).

De tels écrans sont bien connus et notamment décrits dans les documents EP-A-0 092 181 et EP-A-0 032 362.

De manière plus précise encore, la présente invention se rapporte au problème de l'écriture sur de tels écrans d'un certain nombre Q de nuances ou de niveaux de gris Gⱼ sur une image en noir et blanc ou en couleurs.

L'obtention d'une nuance de gris Gⱼ sur un pixel déterminé ne peut résulter jusqu'à maintenant que de l'affichage sur ce pixel d'une séquence comportant un certain nombre d'états blancs et d'états noirs, la sensation de gris résultante étant évidemment proportionnelle au rapport du nombre de ces états d'une catégorie et de l'autre ; cette sensation peut résulter soit d'une interpolation due au fonctionnement de l'appareil lui-même (dans le cas des cristaux liquides), soit du phénomène de vision mettant en oeuvre la persistance des impressions rétiniennes. Les niveaux de gris Gⱼ ainsi définis sont en général "équidistants", c'est-à-dire que l'on peut passer de l'un à l'autre de façon discontinue en ajoutant ou en retranchant un état noir ou un état blanc dans les séquences d'affichage. Pour inscrire des niveaux de gris, il faut superposer plusieurs états noirs et plusieurs états blancs sur chaque pixel, ce qui implique de balayer plusieurs fois l'écran au cours de sous trames successives et relatives à une même image. Comme pour les trames, ce balayage a lieu ligne par ligne. L'état de l'art en cette matière est assez bien représenté par le document "Conference Records of the 1985 International Display Research Conference, San Diego, California, 15-17 Octobre 1985, pages 215 à 220" ainsi que par les documents EP-A-0 219 479, et FR-A-88 12 810 du 30 Septembre 1988.

Tous les procédés de l'art connu qui vient d'être sommairement rappelé et qui permettent l'affichage de telles nuances de gris possèdent néanmoins, à des degrés divers, un certain nombre d'inconvénients qui sont mal résolus à l'heure actuelle et que l'on peut désigner sous le terme de couplage signifiant qu'en fait, l'affichage d'un pixel déterminé d'un tel écran n'est pas complètement indépendant de l'affichage des pixels voisins. Ces défauts, que l'on rappellera brièvement maintenant, sont bien connus de l'homme de métier et se trouvent décrits notamment dans les "Proceedings de la conférence SID" tenue à Las Vegas en Mai 1990, pages 412 à 415.

Un couplage existe d'abord entre les différents pixels d'une même colonne pour la raison suivante. Lors de l'excitation d'un pixel déterminé de cette colonne, le signal de données appliqué sous forme d'échelons de tension ±VC à la colonne considérée parvient en même temps à tous les autres pixels de cette colonne qui ne correspondent pas àdes lignes sélectionnées à cet instant. Autrement dit, il en résulte des signaux parasites qui perturbent l'état instantané de ces autres pixels. Plus précisément, le couplage entre les pixels d'une même colonne dépend essentiellement du nombre de transitions du noir au blanc présentes dans la colonne considérée. En d'autres termes, ce défaut est d'autant plus marqué que le nombre de passages du noir au blanc, dans les pixels d'une même colonne, est élevé.

Ce défaut est un défaut inhérent au principe d'adressage de l'écran lui-même. Le couplage dépend de l'image que l'on affiche, laquelle est totalement aléatoire en ce qui concerne les successions de pixels blancs et de pixels noirs. En effet, dans tous les procédés d'affichage de gris de l'art antérieur précédemment rappelé, le procédé de balayage apporte ses successions de blancs et de noirs aux différents pixels de façon aléatoire en fonction des différentes phases d'adressage de l'image. Il en résulte par conséquent une interaction ou corrélation temporelle entre le procédé de balayage de l'écran et l'image que l'on doit y afficher, qui peut ainsi de façon aléatoire et sans aucun recours possible, accentuer les défauts propres de l'écran.

L'un des objets de la présente invention est précisément d'introduire un ordonnancement des phases d'adressage au sein du procédé de balayage de façon à rendre aussi faible que possible la corrélation précédente en rendant le nombre de fronts de tension ou de transitions sur chaque colonne, aussi indépendant que possible de l'image en cours d'affichage.

La présente invention a également pour objet de corriger un autre défaut lié à la notion de couplage entre les différents pixels mentionnés précédemment. Il s'agit cette fois non plus des colonnes mais des lignes et des défauts résultant du phénomène suivant. La différence de potentiel appliqué à chaque pixel sur les conducteurs ligne et les conducteurs colonne pour y afficher soit un état blanc, soit un état noir, conduit au développement, sur les surfaces des conducteurs en présence qui constituent en fait des capacités locales au niveau de chaque pixel, de charges électriques d'un signe donné pour les pixels noirs et de signe opposé pour les pixels blancs. Si par conséquent, lors du passage d'une ligne à la suivante, la différence du nombre de noirs et du nombre de blancs affiché est élevée, il y a sur tous les conducteurs de lignes de l'écran un changement important de charges conduisant à un écoulement de celles-ci sous forme d'un courant parasite qui vient perturber l'électronique de commande des lignes. On a donc intérêt, pour la qualité de l'image à garder aussi constant que possible au cours de l'affichage, le nombre de pixels noirs et le nombre de pixels blancs sur chaque ligne. L'invention réalise pratiquement cette situation en gardant la différence du nombre de pixels blancs et du nombre de pixels noirs constant d'une ligne à l'autre.

La présente invention a pour objet un procédé d'affichage sur un écran matriciel composé de pixels disposés selon K lignes et M colonnes d'images susceptibles de comporter Q niveaux de gris (Gₒ...Gⱼ...G_{Q-1}) obtenus par inscription sur chaque pixel, au cours d'un processus d'inscription des données d'images ligne par ligne lors des N sous trames (0,...,t,...N-1) de chaque trame, d'une succession d'états noir et blanc choisis parmi N phases d'adressage (Aₒ...Aᵢ...A_{N-1}) dont chacune définit, pour l'affichage d'un gris Gⱼ donné, un état noir ou blanc, le déroulement de l'ensemble des phases assurant l'inscription du nombre d'états blanc et noir nécessaires à l'obtention à la fin d'une trame du niveau de gris Gⱼ souhaité sur chaque pixel, caractérisé en ce que :
I) le balayage de l'écran se fait en divisant chaque ligne en S sous lignes (1,...q,...S) sélectionnées chacune pendant un sous temps de ligne de durée égale à Tl/S, Tl étant le temps d'adressage d'une ligne, S informations successives étant alors adressées sur chaque colonne pendant le temps Tₗ ;
II) le choix d'un affichage noir ou blanc sur chaque pixel pendant la phase d'adressage Aᵢ pour obtenir le gris Gⱼ obéit aux règles suivantes :
   1) si N = Q-1, et si
      a) i<j, on affiche un état blanc
      b) i ≥j, on affiche un état noir

   2) si N = Q+1,
      a) si i≤j, on affiche un état blanc
      b) sinon on affiche un état noir

   3) si N>Q+1, on définit 0≤U≤N-Q-1 et
      a) si i≤j+U, on affiche un état blanc,
      b) sinon on affiche un état noir.
III) l'indice de la phase Aᵢ sur le pixel (l, c) de la ligne l et de la colonne c, pendant la sous trame d'ordre t et la sous ligne d'ordre q étant noté i(l,c,q,t) obéit aux règles suivantes:

1)a) si S<N
   i(1,1,1,t)=ST(t modulo N)
   avec ST(x) élément d'un arrangement quelconque des N premiers entiers (0≤x≤N-1),
1)b) si S=N
   i(1,1,1,t) =ST(t modulo N)
   ou i(1,1,1,t)=α avec α entier constant tel que 0≤α≤N-1
2) i(l,c,q+1,t)= i[(l,c,q,t)+1] modulo N avec 1≤q≤S
3) i(l+1,c,q,t)= [i(l,c,q,t)+S] modulo N avec 1≤l≤K
4) i(l,c,q,t)= [i(l,1,q,t,)+SC(c modulo N)] modulo N
   avec 1≤c≤M
   et SC(y) élément d'un arrangement quelconque des N premiers entiers (0≤y≤N-1).

A partir de la définition précédente du procédé, on peut faire les remarques suivantes.

Tout d'abord, le cas général d'un balayage de l'écran à l'aide de lignes divisées en S sous lignes inclut le cas où S=1, c'est-à-dire où il n'y a pas de sous-lignes et ou chaque ligne n'est ouverte qu'une seule fois au cours de chaque sous trame. C'est le cas le plus fréquemment utilisé jusqu'à maintenant dans l'art antérieur.

Le choix de l'affichage d'un état noir N ou d'un état blanc B sur chaque pixel au cours de chaque ouverture de ligne ou de sous ligne lors d'une sous-trame, résulte, comme dans l'art antérieur, de la lecture d'un tableau matriciel à double entrée dont les lignes j représentent les niveaux de gris Gⱼ à afficher et les colonnesiles différentes phases d'adressage Aᵢ lors de chaque sous trame du balayage.

Le tableau I est relatif au cas N=Q-1, avec Q=8 et N=7. Il se caractérise par la présence d'un niveau Gₒ composé uniquement d'états noirs et d'un niveau G₇ composé uniquement d'états blancs, c'est-à-dire de deux niveaux sans transition blanc-noir. La lecture de ce tableau montre, par exemple, que si l'on veut afficher sur un pixel donné un gris G₃, on affichera un état blanc lors de chacune des phases A0, A1, A2 et un état noir lors de chacune des phases A3, A4, A5, A6.

Le tableau II est relatif au cas N=Q+1 avec Q=8 et N=9. Il se caractérise par le fait qu'il existe une transition noir/blanc pour chaque nuance de gris, c'est-à-dire en fait lors d'une séquence d'affichage comportant l'ensemble des N phases d'adressage. On verra, dans la suite du présent texte, toute l'importance de cette remarque.

Le tableau IIbis relatif au cas N>Q+1 avec Q=8 et 0≤U≤N-9 se caractérise également par le fait qu'il n'y a qu'une transition noir/blanc pour chaque nuance de gris.

Indépendamment du balayage éventuel en sous-lignes et de l'emploi du tableau II ou du tableau IIbis précédents, la caractéristique essentielle de l'invention réside dans l'ordre de séquencement des N phases d'adressage sur chaque pixel lors de N sous trames successives qui est entièrement original et corrige au maximum les défauts rappelés des écrans de l'art antérieur pour lesquels le séquencement ne faisait l'objet d'aucune volonté particulière d'organisation.

Cette organisation de l'ordre de séquencement des N phases d'adressage résulte des formulations mathématiques données sous le § III, alinéas 1, 2, 3 et 4 de la définition générale précédente du procédé objet de l'invention. On en expliquera maintenant la substance et la raison d'être.
III,1 : La formule ST(x) désigne l'élément d'ordre x d'un arrangement (au sens de l'analyse combinatoire) choisi arbitrairement des N premiers entiers, zéro inclus. Si par exemple N=7, et si ST=5361024, on aura alors :

| |
|---|
| ST(0) = 5 |
| ST(1) = 3 |
| ST(2) = 6 |
| ST(6) = 4 |

La formule i(1,1,1,t)=ST(t modulo N) signifie que la suite précédente ST(0), ST(1), ST(2)...ST(N-1) désigne l'ordre ou l'indice des phases appliquées sur le premier pixel de la première ligne, de la première colonne et de la première sous ligne de l'écran lors des sous trames successives . Elle signifie également que cette suite est répétitive
de façon cyclique de période N sauf lorsque S=N et i(1,1,1,t)=α où cette suite est constante.
III,2 : Cette formule indique que le numéro d'ordre de la phase appliquée à un pixel déterminé lors d'une sous trame, est augmenté d'une unité lorsque l'on passe d'une sous ligne à la suivante. Le facteur modulo N assure le caractère cyclique de la suite des phases lorsque l'on a atteint la Nème.
III,3 : Cette formule indique que le numéro d'ordre de la phase appliquée à un pixel déterminé lors d'une même sous trame est augmenté de S unités lorsque l'on passe d'une ligne à la suivante.
III,4 : SC(y) étant l'élément d'ordre Y d'un arrangement quelconque des N premiers entiers, zéro inclus, semblable ou non à l'arrangement ST (0,1,2...N-1), cette formule signifie que, pour un pixel appartenant à une ligne l, à une sous ligne q et lors d'une sous trame donnée t, le numéro d'ordre de la phase appliquée est celui du pixel correspondant de la colonne 1 augmenté de SC(c). Les deux facteurs modulo N assurent le caractère cyclique de la suite des indices des phases lorsque l'on a atteint la Nème, ce qui se produit lorsque le nombre des colonnes est supérieur à N, ou lorsque le numéro d'ordre i ainsi calculé dépasse N.

Dans tous les exemples d'ordonnancement des phases qui seront donnés ultérieurement, on choisira, pour plus de commodité dans le calcul rapide de celles-ci, des arrangements SC composés d'éléments se suivant dans l'ordre naturel des chiffres. Il devra toutefois être bien entendu qu'il s'agit d'exemples donnés à titre non limitatifs et que, dans le cas général, les séries SC peuvent être dans un ordre quelconque. En pratique toutefois, l'expérience montre qu'il y a intérêt à choisir de préférence les règles de formation suivantes :
- pour un écran monochrome SC(y+1)=SC(y)+1, par exemple SC=0123456 ;
- pour un écran trichrome SC(y+1)=[SC(y)+3]modulo N, par exemple 0362514 pour N=7.

On peut enfin remarquer que du fait de la relation i(1,1,1,t)=ST (t modulo N) le procédé de balayage est périodique de période N sous trames. Lorsque S=N et i(1,1,1,t)=α, le procédé est de période 1 sous trame. Quand on emploie en plus des sous lignes, la relation i(l,c,q+1,t)=[i(l,c,q,t)+1]modulo N montre que le procédé de balayage reste périodique de période de N sous trames. Cependant dans ce cas chaque pixel est adressé NxS fois au cours de cette période et la période "moyenne" du phénomène est égale alors à N/S sous trames.

De façon avantageuse, si [(K.S)modulo N]#0, ST(x+1)=[ST(x)+ β]modulo N où β est un entier égal à (K.S).modulo N.

Les exemples qui vont suivre montrent la succession de phases d'adressage en se référant à des écrans possédant un nombre de lignes et de colonnes très petit par rapport aux écrans de la réalité. Ces exemples auront donc essentiellement un rôle illustratif, destiné à faire comprendre l'ordonnancement des différentes phases d'adressage des pixels dans le procédé selon l'invention.

Le tableau III est relatif à un écran possédant quatre lignes et quatre colonnes (K=M=4). Il est adressé selon Q=8 niveaux de gris, blanc, et noir compris et N=7 phases d'adressage.

Il correspond au cas N=Q-1 et fonctionne selon le tableau I donné précédemment. Pour ce tableau III, on a choisi la série trame ST=0415263 et la série colonne SC=0123456. Dans ce cas, ST(x+1)=[ST(x)+4]modulo N car β= 4 ici.

L'écran est adressé dans un procédé ligne à ligne (S=1). Le tableau III montre, pour chaque pixel, les indices des phases d'adressage lors des trames t=0 à t=6.

Le tableau IV est relatif à un exemple dans lequel N=Q-1 avec N=7, Q=8 et S=2. Pour cet exemple, on a choisi la série trame ST=0123456 et la série colonne SC=0123456.

Le tableau IV est également relatif à un écran possédant quatre lignes et quatre colonnes. La correspondance entre l'ordre des phases d'adressage et du blanc ou du noir à afficher en fonction d'un gris déterminé peut résulter par conséquent du tableau I précédent.

Dans l'exemple de mise en oeuvre du tableau IV, chaque ligne est balayée deux fois au cours de chaque sous trame, chaque pixel étant par conséquent adressé deux fois au cours de chacune d'entre elles.

Le tableau V est toujours relatif à l'affichage d'un écran à quatre lignes et quatre colonnes, mais cette fois dans le cas où N=Q+1, c'est-à-dire où l'on se réfère au tableau II précédent. Les données choisies pour cet exemple sont N=9, Q=8, S=2. Il y a donc neuf sous trames numérotées de 0 à 8, dont par simplicité, on a seulement représenté les sous trames 0, 1, 2 et 8.

Dans cet exemple, la série de trame ST=234567801 et la série colonne SC=012345678.

Le tableau VI montre un exemple dans lequel, l'écran a douze colonnes et six lignes (M=12 et K=6). Il correspond au cas N=Q+2 avec N=10, Q=8 et S=2.

Pour cet exemple, la série trame ST a été choisie égale à 2345678901 et la série colonne SC=9012345678.

Le tableau VI montre les indices des phases d'affichage sur chaque pixel pour les sous trames 0, 1 ... et 9. La correspondance des phases avec les états noir ou blanc pour un gris donné est fixée par le tableau IIbis.

Les tableaux précédents permettent de vérifier aisément les avantages apportés par le procédé objet de l'inventon en matière de couplage, pour l'affichage d'images d'un gris Gⱼ donné.

Pour le couplage entre pixels d'une même colonne, on vérifie que, pour l'affichage d'un même gris donné Gⱼ, les indices des phases d'adressage se succèdent de manière cyclique dans l'ordre naturel au cours d'une même sous trame, ce qui conduit à minimiser le nombre de transitions noir/blanc et blanc/noir.

Pour le couplage entre pixels lors du passage d'une ligne (ou sous ligne) à la suivante, on constate que la constance (ou quasi constance) de la différence (nombre de pixels blancs) - (nombre de pixels noirs) provient du fait que les numéros d'ordre des phases d'affichage de deux lignes consécutives qui reproduisent avec un décalage d'une unité les séries colonnes SC sous forme cyclique (modulo N), sont pratiquement identiques dès lors que le nombre M de colonnes est élevé par rapport au nombre N de phases, ce qui est le cas général.

Un écran adressé selon le procédé objet de l'invention est donc le mieux à même de réagir à l'arrivée des données aléatoires noires et blanches du signal d'image.

On décrira maintenant en se référant à la figure, un exemple non limitatif d'un dispositif de mise en oeuvre du procédé d'affichage de niveau de gris sur un écran matriciel, objet de l'invention.

Le dispositif décrit permet l'affichage de Q niveaux de gris et utilise N phases d'adressage.

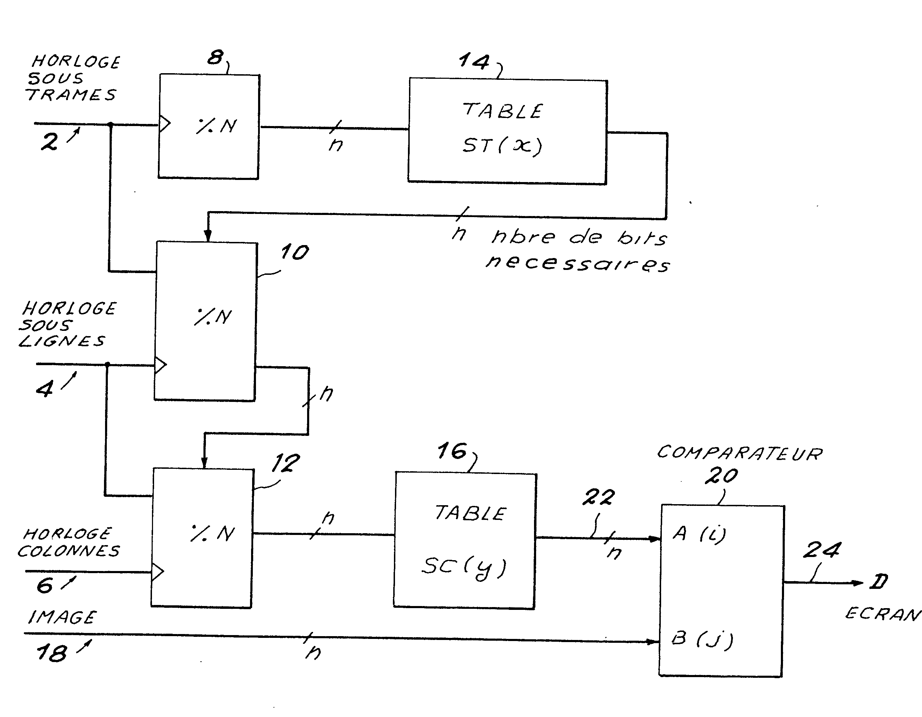

Le dispositif de la figure 1 fonctionne à partir de trois horloges non représentées qui servent à séquencer les sous trames, les sous lignes et les colonnes. Les tops d'une horloge sous trame sont envoyés sur la ligne 2, les tops d'une horloge sous lignes sur la ligne 4, et les tops d'une horloge colonne, sur la ligne 6.

L'appareil fonctionne à l'aide de compteurs modulo N (diviseur par N) référencés 8, 10 et 12 sur la figure. Les compteurs 8 et 12 sont associés àun circuit de conversion par exemple du type PROM, le circuit de conversion 14 associé au compteur 8 étant destiné à délivrer la table ST(x) des séries trames et le circuit de conversion 16 associé au compteur 12 étant destiné à délivrer les séries de colonnes SC(y). Les différentes valeurs de gris Gⱼ correspondant à l'image à afficher sont introduites sur la ligne 18, chacun des niveaux de gris étant codé par une série de n bits (2ⁿ⁻¹<N≤2ⁿ) ainsi que toutes les informations en sortie des circuits de conversion ou des compteurs.

Le compteur 8 compte les fronts de l'horloge sous trame parvenus sur la ligne 2. Le compteur 10 compte les fronts de l'horloge sous lignes et est préchargé à chaque top de l'horloge sous trame par la valeur provenant du circuit 14.

Le compteur 12 compte les fronts de l'horloge colonne à leur arrivée sur la ligne 6 et est préchargé à chaque top de l'horloge sous ligne arrivant sur la ligne 4 par la valeur du compteur précédent 10.

Un comparateur 20 reçoit, à son entrée 22 la sortie du circuit de conversion 16 qui représente la valeur i correspondant à l'indice de la phase d'adressage en cours. Ce comparateur 20 compare cette valeur i à la valeur j en provenance de la ligne 18 représentant le gris à afficher et selon la valeur de i par rapport à celle de j, fournit en sortie 24 un signal de données D noir ou blanc que l'on applique au pixel en cours d'écriture défini à la fois par l'ordre de la sous trame, l'ordre de la sous ligne et l'ordre de la colonne.

Dans le cas particulier où ST(x+1)=[ST(x)+β]modulo N, le compteur 8 et le circuit de conversion 14 peuvent être supprimés ainsi que l'horloge sous trame. En effet, compte tenu dans ce cas des rapports entre K, S et N, la relation précédente est obtenue directement avec le compteur 10.

**TABLEAU I**

| | | | | | | | | | |
|---|---|---|---|---|---|---|---|---|---|
| | i | 0 | 1 | 2 | 3 | 4 | 5 | 6 | |
| j | | | | | | | | | |
| 0 | | N | N | N | N | N | N | N | aucune transition N/B |
| 1 | | B | N | N | N | N | N | N | une transition N/B |
| 2 | | B | B | N | N | N | N | N | " |
| 3 | | B | B | B | N | N | N | N | " |
| 4 | | B | B | B | B | N | N | N | " |
| 5 | | B | B | B | B | B | N | N | " |
| 6 | | B | B | B | B | B | B | N | " |
| 7 | | B | B | B | B | B | B | B | " |

**TABLEAU II**

| | | | | | | | | | | | |
|---|---|---|---|---|---|---|---|---|---|---|---|
| | i | 0 | 1 | 2 | 3 | 4 | 5 | 6 | 7 | 8 | |
| j | | | | | | | | | | | |
| 0 | | B | N | N | N | N | N | N | N | N | une transition N/B |
| 1 | | B | B | N | N | N | N | N | N | N | " |
| 2 | | B | B | B | N | N | N | N | N | N | " |
| 3 | | B | B | B | B | N | N | N | N | N | " |
| 4 | | B | B | B | B | B | N | N | N | N | " |
| 5 | | B | B | B | B | B | B | N | N | N | " |
| 6 | | B | B | B | B | B | B | B | N | N | " |
| 7 | | B | B | B | B | B | B | B | B | N | " |

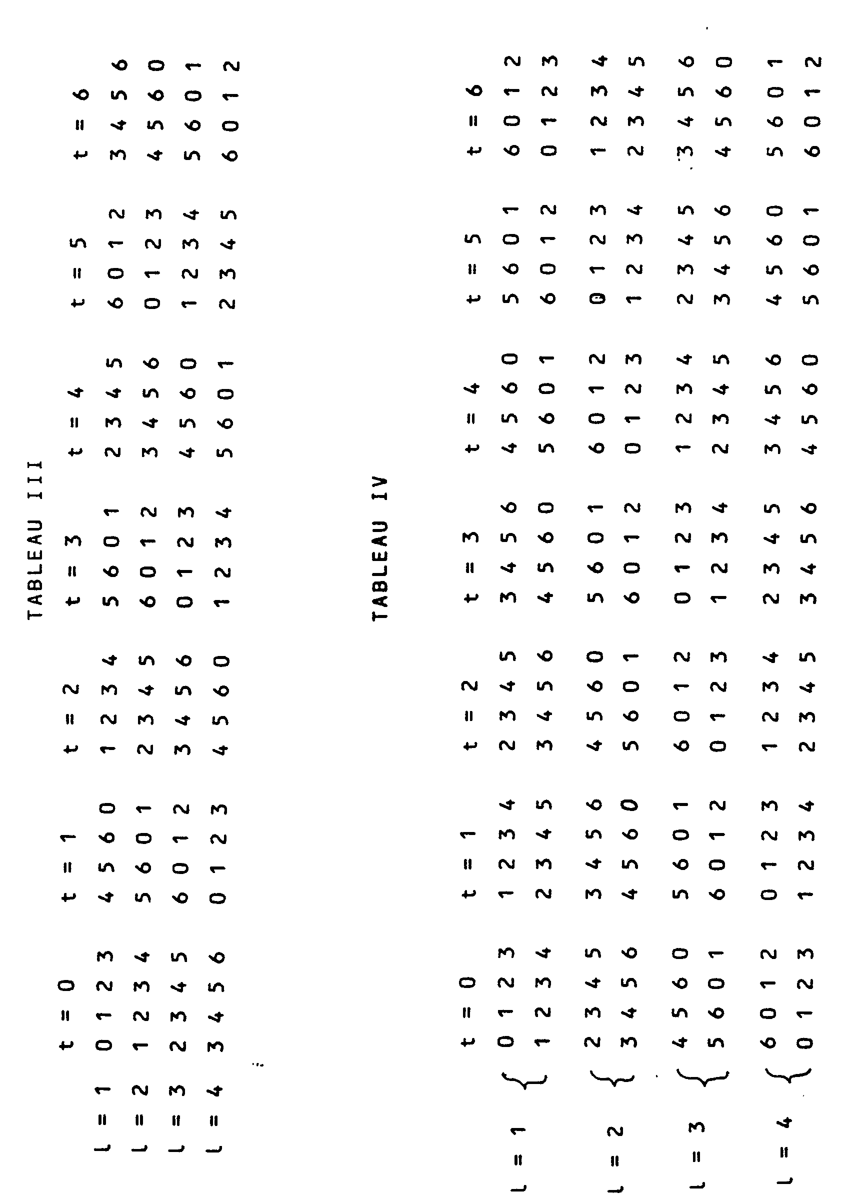

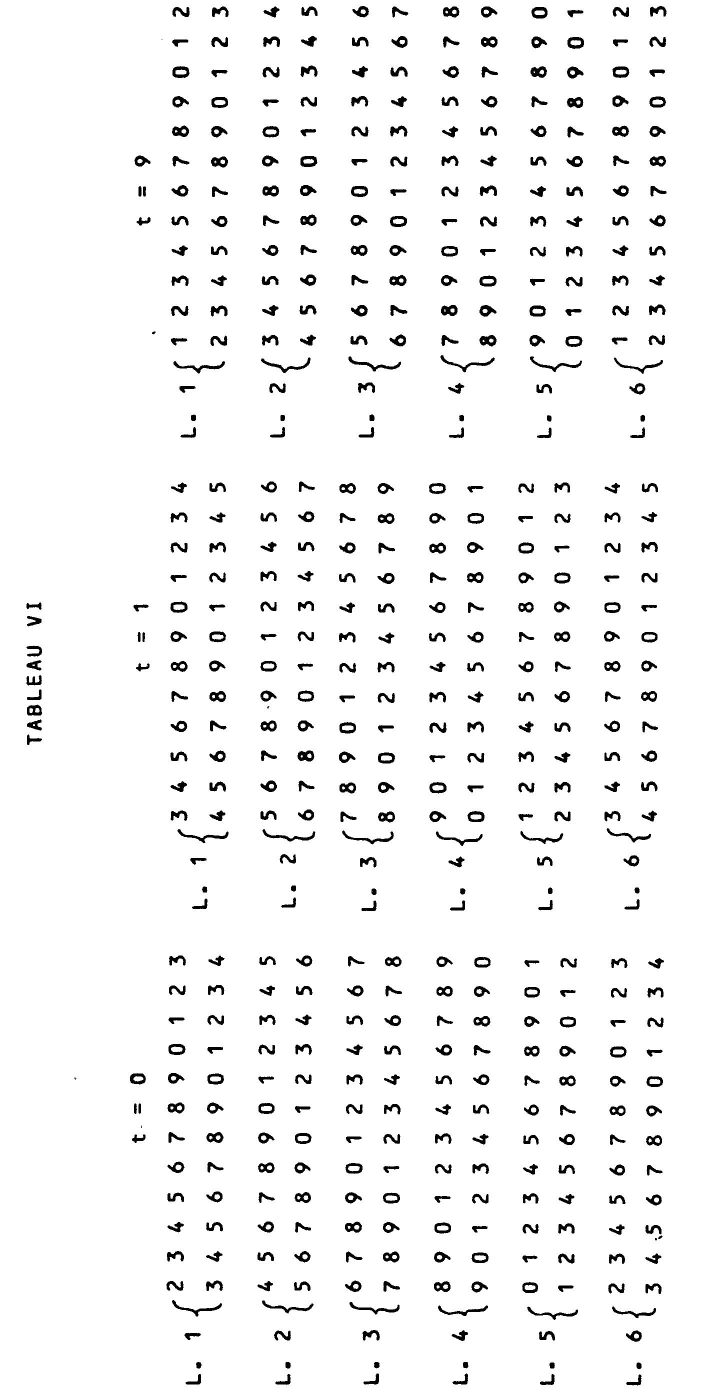

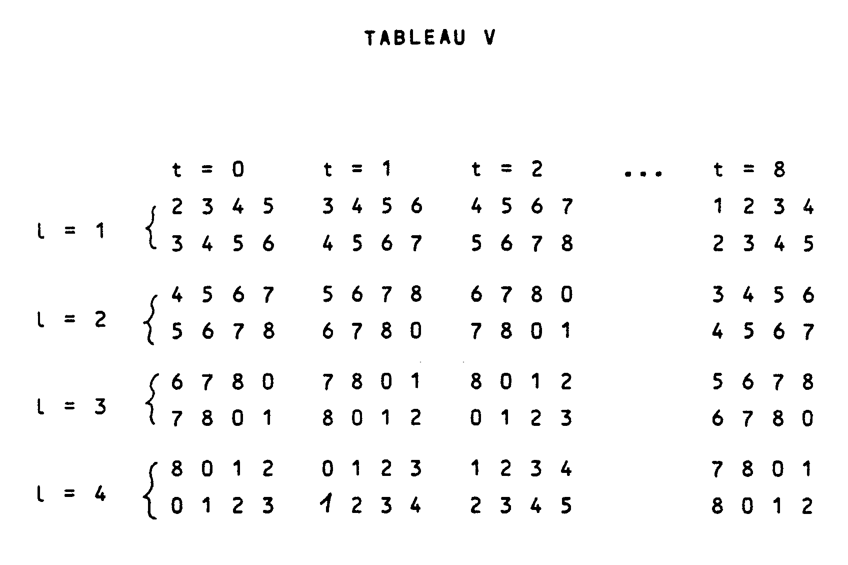

**TABLEAU II bis**

| | | | | | | | | | | |
|---|---|---|---|---|---|---|---|---|---|---|
| | i | 0...U | U+1 | U+2 | U+3 | U+4 | U+5 | U+6 | U+7 | ...N |
| j | | | | | | | | | | |
| 0 | | B...B | N | N | N | N | N | N | N | ...N |
| 1 | | B...B | B | N | N | N | N | N | N | ...N |
| 2 | | B...B | B | B | N | N | N | N | N | ...N |
| 3 | | B...B | B | B | B | N | N | N | N | ...N |
| 4 | | B...B | B | B | B | B | N | N | N | ...N |
| 5 | | B...B | B | B | B | B | B | N | N | ...N |
| 6 | | B...B | B | B | B | B | B | B | N | ...N |
| 7 | | B...B | B | B | B | B | B | B | N | ...N |

## Revendications

1. Procédé d'affichage sur un écran matriciel composé de pixels disposés selon K lignes et M colonnes d'images susceptibles de comporter Q niveaux de gris (Gₒ...Gⱼ...G_{Q-1}) et obtenues par inscription sur chaque pixel, au cours d'un processus d'inscription des données d'images ligne par ligne lors des N sous trames (0,...,t,...N-1) de chaque trame, d'une succession d'états noir et blanc choisis parmi N phases d'adressage (Aₒ..Aᵢ..A_{N-1}) dont chacune définit, pour l'affichage d'un gris Gⱼ donné, un état noir ou blanc, le déroulement de l'ensemble des phases assurant l'inscription du nombre d'états blanc et noir nécessaires à l'obtention à la fin d'une trame du niveau de gris Gⱼ souhaité sur chaque pixel, caractérisé en ce que :
I) le balayage de l'écran se fait en divisant chaque ligne en S sous lignes (1,...q,...S) sélectionnées chacune pendant un sous temps de ligne de durée égale à Tl/S, Tl étant le temps d'adressage d'une ligne, S informations successives étant alors adressées sur chaque colonne pendant le temps Tₗ ;
II) le choix d'un affichage noir ou blanc sur chaque pixel pendant la phase d'adressage Aᵢ pour obtenir le gris Gⱼ obéit aux règles suivantes :
1) si N = Q-1, et si
a) i<j, on affiche un état blanc
b) i≥j, on affiche un état noir
2) si N = Q+1,
a) si i≤j, on affiche un état blanc
b) sinon on affiche un état noir
3) si N>Q+1, on définit 0≤U≤N-Q-1 et
a) si i≤j+U, on affiche un état blanc,
b) sinon on affiche un état noir.
III) l'indice de la phase Aᵢ sur le pixel (l, c) de la ligne l et de la colonne c, pendant la sous trame d'ordre t et la sous ligne d'ordre q étant noté i(l,c,q,t) obéit aux règles suivantes:
1)a) si S<N
i(1,1,1,t)=ST(t modulo N)
avec ST(x) élément d'un arrangement quelconque des N premiers entiers (0≤x≤N-1),
1)b) si S=N
i(1,1,1, t )=ST(t modulo N)
ou i(1,1,1,t)=α avec α entier constant tel que 0≤α≤N-1
2) i(l,c,q+1,t)= i[(l,c,q,t)+1] modulo N avec 1 ≤ q ≤ S
3) i(l+1,c,q,t)= [i(l,c,q,t)+S] modulo N avec 1≤l≤K
4) i(l,c,q,t)= [i(l,1,q,t,)+SC(c modulo N)] modulo N
avec 1≤ c ≤ M
et SC(y) élément d'un arrangement quelconque des N premiers entiers (0 ≤ y ≤ N-1).

2. Procédé d'affichage d'un écran monochrome selon la revendication 1, caractérisé en ce que l'on choisit SC(y+1)=SC(y)+1.

3. Procédé d'affichage d'un écran trichrome, selon la revendication 1, caractérisé en ce que l'on choisit
SC(y+1)= [SC(y)+3] modulo N.

## Patentansprüche

1. Darstellungsverfahren auf einem Matrix-Bildschirm, der aus Bildelementen gebildet ist, die entlang von K Bildzeilen und M Bildspalten angeordnet sind und Q Grauwerte (G_{O} ... Gⱼ ... G_{Q-1}) umfassen können und, im Laufe eines zeilenförmigen Schreibverfahrens von Bilddaten von N Unterteilbildern (0, ... t, ... N-1) von jedem Teilbild, durch Einschreiben an jedem Bildelement einer Folge von schwarzen und weißen Zuständen erhalten werden, die aus N Adressierungsphasen (Aₒ ... Aᵢ ... A_{N-1}) ausgewählt werden, von denen jede für die Darstellung eines gegebenen Graus Gⱼ einen schwarzen oder weißen Zustand definiert, wobei der Ablauf der gesamten Phasen das Schreiben der Anzahl von weißen und schwarzen Zuständen sicherstellt, die zum Erhalten des bei jedem Bildelement erwünschten Grauwertes Gⱼ am Ende eines Teilbildes notwendig sind, **dadurch** **gekennzeichnet**, daß:
I) das Abtasten des Schirms gemacht wird, indem jede Zeile in S Unterzeilen (1,... q,... S) unterteilt wird, von denen jede während einer Unterzeit der Zeile mit einer Dauer gleich Tl/S ausgewählt wird, wobei Tl die Adressierungszeit einer Zeile ist, S aufeinanderfolgende Informationen sind, die dann bei jeder Spalte während der Zeit Tₗ adressiert werden,
II) die Auswahl einer schwarzen oder weißen Darstellung bei jedem Bildelement während der Adressierungsphase Aᵢ, um das Grau Gⱼ zu erhalten, den folgenden Regeln gehorcht:
1) wenn N = Q-1 und wenn
a) i < j, stellt man einen weißen Zustand dar
b) i ≥ j, stellt man einen schwarzen Zustand dar,
2) wenn N=Q+1
a) wenn i ≤ j, stellt man einen weißen Zustand dar,
b) wenn nicht, stellt man einen schwarzen Zustand dar,
3) wenn N > Q+1, definiert man 0 ≤ U ≤ N-Q-1 und
a) wenn i ≤ j+U, stellt man einen weißen Zustand dar,
b) wenn nicht, stellt man einen schwarzen Zustand dar;
III) der Index der Phase Aᵢ bei dem Bildelement (l,c) der Zeile l und der Spalte c während des Teilbildes der Ordnung t und der Unterzeile der Ordnung q mit i (l, c, q, t) bezeichnet wird, den folgenden Regeln gehorcht:
1) a) wenn S < N
i(1,1,1,t) = ST(t Modulo N)
mit ST(x) einem Element irgeneiner Anordnung der N ersten ganzen Zahlen (0 ≤ x ≤ N-1),
1) b) wenn S = N
i(1,1,1,t) = ST(t Modulo N)
oder i(1,1,1,t) = α, mit α einer ganzzahligen Konstanten wie 0 ≤ α ≤ N-1
2) i(l,c,q+1,t) = i[l,c,q,t)+1] modulo N
mit 1 ≤ q ≤ S
3) i(l+1,c,q,t) = i[l,c,q,t)+S] modulo N
mit 1 ≤ l ≤ K
4) i(l,c,q,t) = i[l,1,q,t)+SC(c modulo N)]
modulo N
mit 1 ≤ c ≤ M
und SC(y) einem Element irgeneiner Anordnung der N ersten ganzen Zahlen (0 ≤ y ≤ N-1),

2. Darstellungsverfahren auf einem monochromen Schirm gemäß Anspruch 1, **dadurch gekennzeichnet**, daß man
SC(y+1) = SC(y) + 1 auswählt.

3. Darstellungsverfahren auf einem dreifarbigen Schirm gemäß Anspruch 1, **dadurch gekennzeichnet**, daß man auswählt
SC(y+1) = [SC(y)+3] Modulo N

## Claims

1. Method for displaying, on a matrix screen composed of pixels disposed along K lines and M columns, images able to comprise Q levels of greys (Go...Gj...GQ-1) by inscribing on each pixel, during a process for inscribing image data line by line during N sub-frames (0,...t,...N-1) of each trame, a succession of black and white states selected from N addressing phases (Ao...Ai...AN-1), each of which defines, for displaying a given grey Gj, one black or white state, the unfurling of all the phases ensuring the inscription of the number of black and white states required to finally obtain a frame with the desired level of grey Gj on each pixel, wherein
I) the scanning of the screen is effected by dividing each line into S sub-lines (1,...q,...S) each selected during a line sub-time with a period equal to Tl/S, Tl being the addressing time of one line, successive information S then being addressed on each column during the time Tl ;
II) the choice of a black or white display on each pixel during the addressing phase Ai so as to obtain the grey Gj obeys the following rules :
1) if N = Q-1 and if
a) I<j, a white state is displayed
b) i≥j, a black state is displayed
2) if N = Q+1,
a) if i≤j, a white state is displayed
b) otherwise, a black state is displayed
3) if N>Q+1, 0≤U≤N-Q-1 is defined and
a) if i≤j+U, a white state is displayed,
b) otherwise, a black state is displayed.
III) the index of the phase Ai on the pixel (l, c) of the line I and the column c during the sub-frame of order t and the sub-line of order q being noted i(l,c,q,t) obeys the following rules :
1)a) if S<N
i(1,1,1,t)=ST(t modulo N)
with ST(x) an element of any arrangement of N prime
whole numbers (0≤x≤N-1),
1)b) if S=N
i(1,1,1,t)=ST(t modulo N)
or i(1,1,1,t)= α with α a constant integer so that 0≤α≤N-1
2) i(l,c,q,t)= i[(l,c,q,t)+1] modulo N with 1≤q≤S
3) i(l+1,c,q,t)= [i(l,1,q,t)+SC(c modulo N)] modulo
N with 1≤l≤K
4) i(l,c,q,t)= [i'l,1,q,t,)+SC (c modulo N)] modulo N
with 1≤c≤ M
and SC(y) being an element of any arrangement of N prime whole numbers (0≤y≤N-1).

2. Method for displaying on a monochrome screen according to claim 1, wherein SC(y+1)=SC(y)+1 is selected.

3. Method for displaying on a three-colored screen according to claim 1, wherein SC(y+1)= [SC(y)+3] modulo N is selected.
